# EUROPEAN PATENT APPLICATION

(11) **EP 4 834 606 A1**
(43) Date of publication of application: **04.11.2026**
(21) Application number: 26174204.3
(22) Date of filing: 23.04.2026
(51) Int. Cl.: B60H 1/00, B60N 3/10

(54) **AIR CONDITIONING APPARATUS, COOLING SYSTEM AND MOTOR VEHICLE**

(30) Priority: 30.04.2025 CN 202520867565 U
(71) Applicant: Valeo Electrification, 95892 Cergy Pontoise (FR)
(72) Inventor: FAN, Cailian, Shashi, 434007 (CN); LIU, Tingwei, Shashi, 434007 (CN)
(74) Representative: Valeo Powertrain Systems

(57) **Abstract**

Air conditioning apparatus comprising a housing (10), having an air duct, an air flap (20), arranged in the air duct and having a rotation shaft (21), the housing (10) has a communicating channel (11) establishing communication between the interior thereof and the outside, and the rotation shaft (21) of the air flap (20) is a hollow rotation shaft and is connected to the communicating channel (11), so that the air duct is in fluid communication with the outside of the housing (10).

## Description

### Technical Field

The present disclosure relates to an air conditioning apparatus, a cooling system comprising the air conditioning apparatus, and a motor vehicle comprising the cooling system.

### Background Art

An in-vehicle glove box is a storage box located in front of the front passenger seat, used for storing miscellaneous articles, etc. Typically, the glove box is hermetically sealed with respect to the in-vehicle air conditioning apparatus, so cold air blow out of the air conditioning apparatus cannot enter the glove box. Such an arrangement will result in an excessively high temperature inside the glove box during high summer temperatures, preventing the storage of food, drinks, and articles that easily melt and deform.

Thus, those skilled in the art are committed to developing a novel air conditioning apparatus that can solve the abovementioned shortcomings in the prior art.

### Summary of the Invention

The present disclosure provides an air conditioning apparatus, on a housing of which is provided a communicating channel in communication with a hollow rotation shaft of an air flap, allowing a cooling airflow in an air duct to be guided to the outside of the air conditioning apparatus, for example to a box outside the air conditioning apparatus, so as to cool the box, such that a low temperature can be maintained in the box even during high summer temperatures. Furthermore, the above configuration of the present disclosure also allows a cooling airflow which has just flowed to the air flap (i.e. a cooling airflow which has not yet undergone other heat exchange) to be guided into the box outside the air conditioning apparatus directly, increasing the efficiency with which the box is cooled, and avoiding problems such as a low degree of integration and inadequate cooling efficiency caused by additionally providing cooling holes at other positions on the housing. In addition, the communicating channel of the present disclosure can selectively be in fluid communication with the hollow rotation shaft of either one of two air flaps. For example, a communicating channel with a blocked free end may be provided in advance at a position on the housing corresponding to the hollow rotation shaft of each of the two air flaps respectively, and one communicating channel can be opened up as necessary according to actual needs, to increase freedom of operation, and avoid various problems such as processing difficulty and impossibility of flexible configuration caused by additionally providing cooling holes on the housing.

The present disclosure provides an air conditioning apparatus, comprising: a housing, having an air duct; an air flap, arranged in the air duct and having a rotation shaft; wherein the housing has a communicating channel establishing communication between the interior thereof and the outside, and the rotation shaft of the air flap is a hollow rotation shaft and is connected to the communicating channel, so that the air duct is in fluid communication with the outside of the housing.

The above configuration of the present disclosure allows a cooling airflow in the air duct of the air conditioning apparatus to be guided into a box outside the air conditioning apparatus, so as to cool the box, such that a low temperature can be maintained in the box even during high summer temperatures.

The air conditioning apparatus according to the present disclosure may also have one or more of the following features individually or in combination.

In one or more embodiments, the air conditioning apparatus further comprises an evaporator located upstream of the air flap.

The above configuration of the present disclosure ensures that an airflow at the air flap of the air conditioning apparatus is a cooling airflow cooled by the evaporator.

In one or more embodiments, the communicating channel and the hollow rotation shaft extend along the same axis.

The above configuration of the present disclosure allows the communicating channel to be designed as a straight channel, which is structurally simple and easy to manufacture.

In one or more embodiments, the communicating channel is a tubular channel, which is at least partially inserted into the hollow rotation shaft.

The above configuration of the present disclosure can simplify fitting of the communicating channel of the air conditioning apparatus to the air flap.

In one or more embodiments, the communicating channel has an internal portion and an external portion, which respectively extend inside the housing and outside the housing.

In one or more embodiments, a flange directed radially outwards is provided at a free end of the external portion of the communicating channel.

The above configuration of the present disclosure can make it easier for the communicating channel to engage with an external component such as a connecting tube, and form a radial seal with the connecting tube to avoid fluid leakage.

In one or more embodiments, the housing has at least two air flaps supported on an outer wall of the housing, and the communicating channel is selectively fluidically connectable to the hollow rotation shaft of at least one air flap.

The above configuration of the present disclosure can increase freedom of operation, and avoid problems such as processing difficulty and impossibility of flexible configuration caused by additionally providing cooling holes on the housing.

The present disclosure further provides a cooling system, comprising: the air conditioning apparatus described above; a box having a through-hole; and a connecting tube, having one end connected to the communicating channel of the air conditioning apparatus, and another end connected to the through-hole of the box.

The above configuration of the present disclosure allows a cooling airflow in the air conditioning apparatus to be guided into the box, so as to cool the box; thus, even during high summer temperatures, food, drinks and articles that easily melt and deform can be stored in the box, so that they remain at a low temperature, extending the storage time.

The cooling apparatus according to the present disclosure may also have one or more of the following features individually or in combination.

In one or more embodiments, the connecting tube is connected in a sealed manner to a flange at a free end of the communicating channel of the air conditioning apparatus.

The above configuration of the present disclosure can avoid fluid leakage at the position of connection between the connecting tube and the communicating channel.

In one or more embodiments, the box is an in-vehicle glove box.

The present disclosure also provides a motor vehicle, comprising the cooling system described above.

### Brief Description of the Drawings

Fig. 1 is a schematic drawing of a cooling system according to an embodiment of the present disclosure.
Fig. 2 is a schematic drawing of an air conditioning apparatus according to an embodiment of the present disclosure at a first angle of view.
Fig. 3 is a schematic drawing of an air conditioning apparatus according to an embodiment of the present disclosure at a second angle of view.
Fig. 4 is a partial sectional view of an air conditioning apparatus according to an embodiment of the present disclosure, showing the communicating channel and the air flap.
Fig. 5 is a partial sectional view of an air conditioning apparatus according to an embodiment of the present disclosure, at the position of connection between the communicating channel and the hollow rotation shaft of the air flap.
Fig. 6 is a partial sectional view of an air conditioning apparatus according to an embodiment of the present disclosure from another direction, showing the communicating channel and the air flap.
Fig. 7 is a schematic drawing of a housing according to an embodiment of the present disclosure at a first angle of view.
Fig. 8 is a schematic drawing of a housing according to an embodiment of the present disclosure at a second angle of view.
Fig. 9 is a schematic drawing of a housing according to an embodiment of the present disclosure at the position of the communicating channel, showing the external portion of the communicating channel.
Fig. 10 is a schematic drawing of an air flap according to an embodiment of the present disclosure at a first angle of view.
Fig. 11 is a schematic drawing of an air flap according to an embodiment of the present disclosure at a second angle of view.
Fig. 12 is a schematic drawing of Fig. 4 with the air flap omitted, showing the connection port.
Fig. 13 is a schematic drawing of the communicating channel shown in Fig. 12 at another angle of view, showing the connection port.

### Detailed Description of the Invention

Embodiments of the present disclosure are illustrated below through specific examples, and those skilled in the art will readily understand other advantages and effects of the present disclosure from the content disclosed herein.

It should be noted that all of the structures, proportions and sizes, etc. shown in the drawings attached hereto are merely intended to complement the content disclosed herein, for understanding and perusal by those skilled in the art, and are not intended to define conditions limiting the implementability of the present disclosure, and therefore have no substantive technical significance. Any modification of structure, change in proportional relationship or adjustment of size, provided that the effects and objectives achievable by the present disclosure are not affected, shall still fall within the scope of coverage of the technical content disclosed in the present disclosure. Furthermore, words such as "upper" and "a" cited herein are merely for clarity of presentation, and are not intended to limit the scope of implementability of the present disclosure. Changes or adjustments to their relationships that do not substantially alter the technical content should also be regarded as being within the scope of implementability of the present disclosure.

Typically, an air conditioning apparatus and a box for storing miscellaneous articles (e.g. a glove box) are provided in a vehicle, the air conditioning apparatus and the box being sealed with respect to each other, such that cold air blown out of the air conditioning apparatus cannot enter the box. Thus, the temperature in the box is high during high summer temperatures, making it difficult to store food, drinks, and articles that easily melt and deform.

To solve this problem, the present disclosure provides a novel air conditioning apparatus that can conveniently guide a cooling airflow from within the air conditioning apparatus into the box. Specific embodiments of the present disclosure are described in detail below with reference to the drawings.

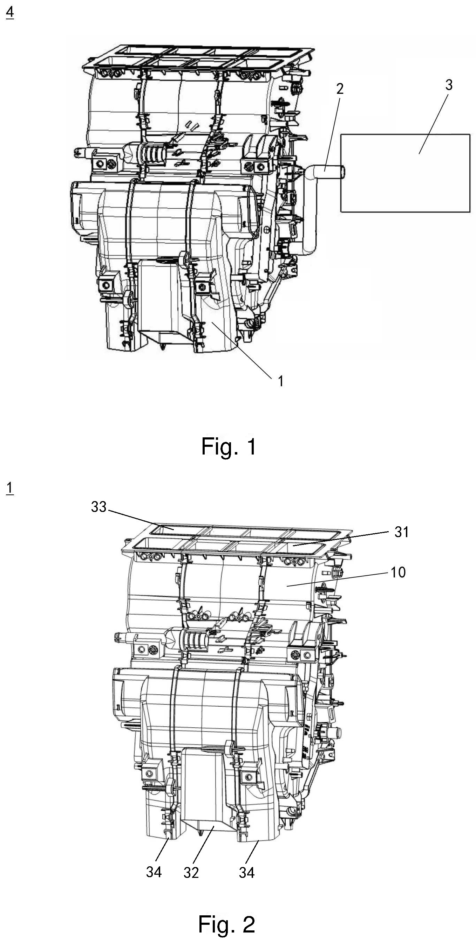

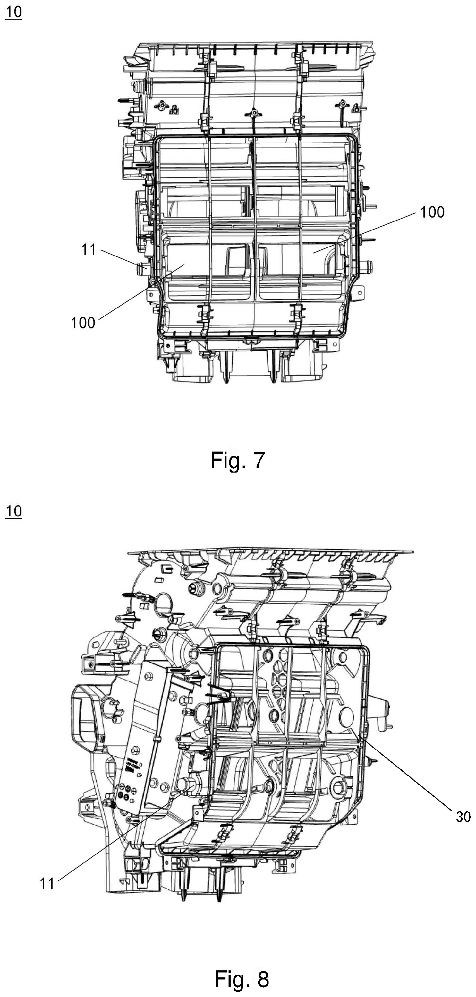

Referring to Figs. 2 - 4, the air conditioning apparatus 1 comprises a housing 10 and an air flap 20, wherein the housing 10 has an air duct 100 allowing the passage of an airflow, and a communicating channel 11 establishing communication between the interior of the housing 10 (in particular, of the air duct 100) and the outside. The air flap 20 has a rotation shaft 21, the rotation shaft 21 being a hollow rotation shaft, so as to reduce the weight of the air flap 20 and allow the passage of an airflow. The air flap 20 is arranged in the air duct 100 of the housing 10, and can rotate with respect to the housing 10 in order to open or close the air flap 20, and controls the flow direction or distribution of an airflow entering the housing 10 through an air inlet 30 of the housing 10 (as shown in Fig. 8). The hollow rotation shaft (i.e. the rotation shaft 21) of the air flap 20 is connected to/in communication with the communicating channel 11 of the housing 10, so that the air duct 100 is in fluid communication with the outside of the housing 10. This configuration allows cooling gas in the air conditioning apparatus 1 to be guided to the outside, in particular into a box 3 outside the air conditioning apparatus 1 (as shown in Fig. 1), so as to cool the box 3. Furthermore, in the present disclosure, since the housing 10 is provided with the communicating channel 11, which is connected to the rotation shaft 21 of the air flap 20 and guides a cooling airflow from within the air duct 100 to the outside (e.g. to the box 3 outside the housing 10), a cooling airflow which has just flowed to the air flap 20 (i.e. a cooling airflow which has not yet undergone other heat exchange) can be guided to the box 3 directly, increasing the efficiency with which the box 3 is cooled, while avoiding problems such as a low degree of integration and inadequate cooling efficiency caused by additionally providing cooling holes at other positions on the housing 10.

Specifically, as shown in Figs. 2, 7 and 8, the housing 10 may define multiple different air ducts, each air duct having a corresponding air outlet. For example, a front face-blowing air duct has a front face-blowing port 31; the front face-blowing port 31 may be located above the housing 10, and is mainly used to supply an airflow to the face or upper body of the driver or front-seat passenger. A rear face-blowing air duct has a rear face-blowing port 32; the rear face-blowing port 32 may be located at a central position below the housing 10, and is mainly used to supply an airflow to the face or upper body of a rear-seat passenger. A defrosting air duct has a defrosting port 33; the defrosting port 33 may also be located above the housing 10, and is mainly used to supply an airflow to the front windscreen and side windows. A feet-blowing air duct has feet-blowing ports 34; the feet-blowing ports 34 are located below the housing 10 and may be arranged at two sides of the rear face-blowing port 32, and are mainly used to supply an airflow to the feet of the passengers in the vehicle. An air inlet 30 is further defined on the housing 10 (as shown in Fig. 8). The air inlet 30 may be located on a side face of the housing 10; an airflow can enter a main air duct (e.g. the air duct 100 mentioned above) in the housing 10 through the air inlet 30, and the flow direction or distribution of the airflow is controlled through cooperation of multiple air flaps 20 and other mixing air flaps (not shown). For example, some of the airflow can be caused to enter the front face-blowing air duct, the rear face-blowing air duct, the defrosting air duct and/or the feet-blowing air duct.

The air conditioning apparatus 1 may further comprise an evaporator (not shown). The evaporator may be arranged at the air inlet 30 of the housing 10 and be tightly mated with a peripheral edge of the air inlet 30, to avoid problems such as low heat exchange efficiency caused by air leakage. Refrigerant in the evaporator may undergo heat exchange with an airflow outside the evaporator, to achieve the effect of cooling the airflow. Specifically, the refrigerant in the evaporator absorbs heat so that the refrigerant is converted to a gaseous state, while the airflow outside the evaporator releases heat so that the airflow is cooled. The airflow cooled by the evaporator in this way can flow into the housing 10 through the air inlet 30, in particular into the air duct 100 of the housing 10. The air flap 20 is arranged in the air duct 100 close to the air inlet 30, so that the airflow cooled by the evaporator flows to the air flap 20 when it has undergone almost no other heat exchange, and the cooling airflow is then guided into the box 3 outside the housing 10 via the communicating channel 11; thus, the efficiency with which the box 3 is cooled can be effectively increased.

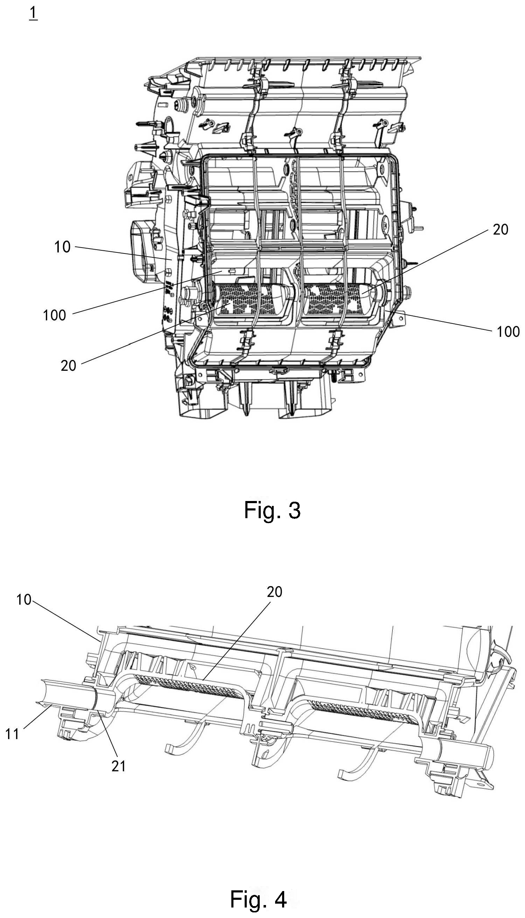

Referring to Figs. 4 - 8 and Figs. 12 - 13, the communicating channel 11 is arranged on the housing 10 close to the air inlet 30, and is connected to the hollow rotation shaft of the air flap 20, so that the cooling airflow in the air duct 100, in particular at the air flap 20, is guided by the communicating channel to the outside of the housing 10. In an embodiment, the communicating channel 11 may be integrally formed with the housing 10, so as to avoid problems such as wasted working hours and inaccurate alignment caused by additional installation. The communicating channel 11 may be a substantially tubular channel. In one embodiment, the communicating channel 11 may be a round tubular channel, to facilitate manufacture (i.e. to facilitate the release of the housing 10 from a mould) and to facilitate sealed connection to an external component (e.g. a connecting tube 2 shown in Fig. 1). Specifically, the communicating channel 11 may be configured to extend along the same axis as the hollow rotation shaft of the air flap 20; that is to say, the communicating channel 11 may be designed as a straight channel extending along a rotation axis of the air flap 20, so that it is structurally simple and easy to manufacture. Of course, the present disclosure is not limited to the above-described structure of the communicating channel 11, as long as the airflow in the air duct 100 is guided to the outside of the housing 10.

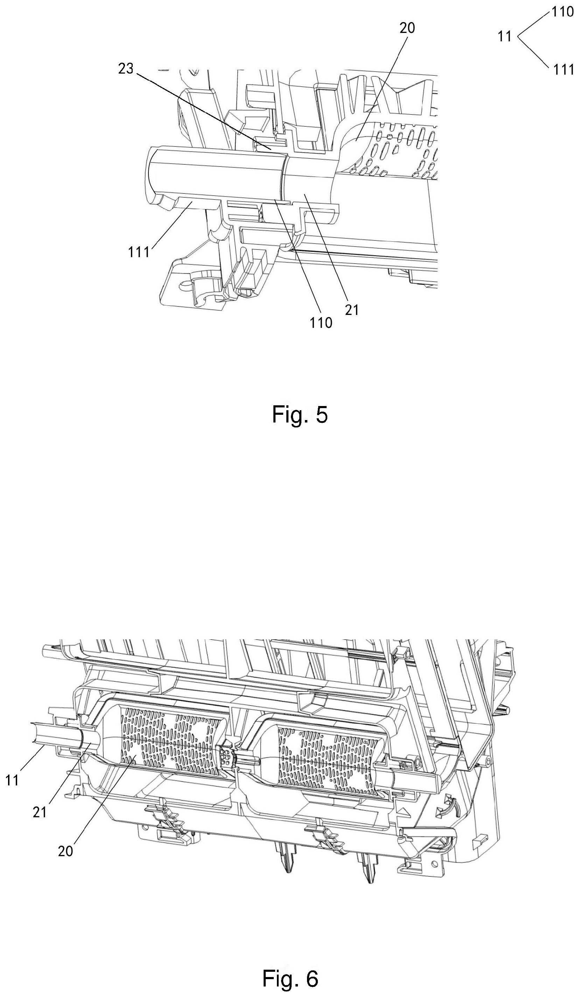

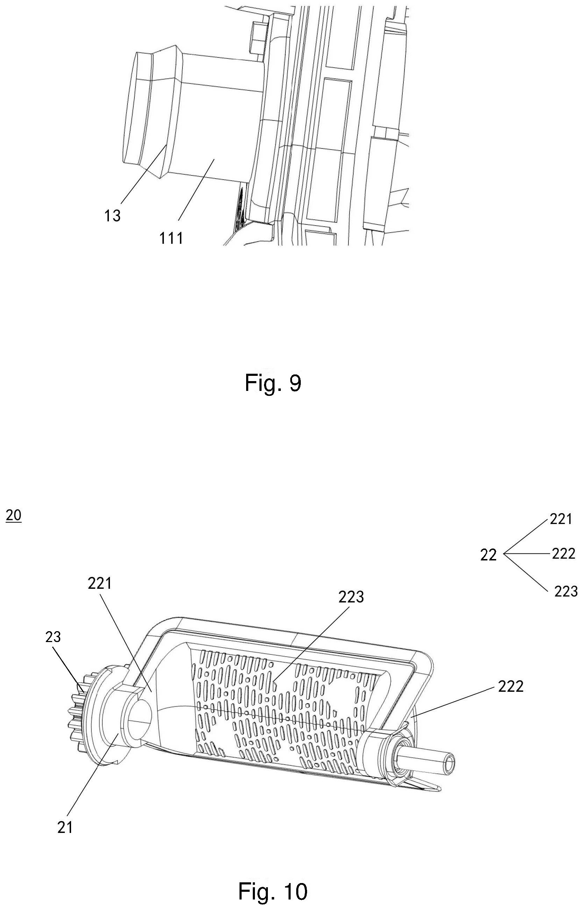

Continuing to refer to Figs. 5, 12 and 13, the communicating channel 11 comprises an internal portion 110 arranged inside the housing 10, and an external portion 111 arranged outside the housing 10. The internal portion 110 is mainly configured to be connected/butt-connected to the hollow rotation shaft (i.e. the rotation shaft 21) of the air flap 20. In an embodiment, the internal portion 110 may be a tubular channel with a smooth outer wall, so that it can be partially plugged into the hollow rotation shaft of the air flap 20 easily, and fitting of the communicating channel 11 to the air flap 20 can be simplified. The external portion 111 is mainly configured to be connected to an external component such as the connecting tube 2 (as shown in Fig. 1) In an embodiment, a flange 13 protruding radially outwards (as shown in Fig. 9) may be provided at a free end of the external portion 111 (i.e. an end remote from the internal portion 110), to facilitate engagement with an external component such as the connecting tube 2 (as shown in Fig. 1), and form a radial seal with the connecting tube 2 to avoid fluid leakage. In an embodiment, the flange 13 may be designed in the form of a circular ring surrounding the entire circumference of the external portion 111. However, the present disclosure is not limited to this; for example, the flange 13 could also be designed in the form of an annular sector surrounding part of the circumference of the external portion 111, as long as the flange 13 can facilitate connection and sealing between the communicating channel 11 and the external component (e.g. the connecting tube 2).

Referring to Figs. 3 and 6, at least two air flaps 20 (the present disclosure uses two as an example for illustration, but is not limited to this) supported on an outer wall of the housing 10 (e.g. a left side wall and a right side wall of the housing 10 as shown in Figs. 3 and 7) are provided in the housing 10. The structures of the two air flaps 20 are substantially identical; there is only slight structural difference at the position of connection therebetween (to be discussed later), and the remaining parts of the structures may be designed as mirror images of one another. The description below focusses on the specific structure of one air flap 20 (e.g. the air flap 20 at the left side shown in Fig. 6).

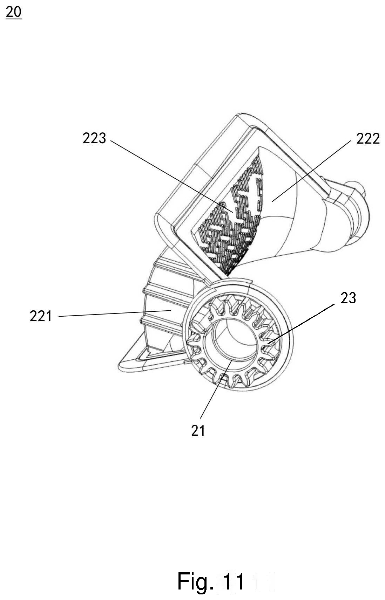

Referring to Figs. 10 and 11, the air flap 20 may be substantially in the shape of a drum. Specifically, the air flap 20 may comprise a rotation shaft 21 and a body part 22 connected to the rotation shaft 21, wherein the body part 22 has two side walls 221 and 222 arranged substantially parallel to each other, and a peripheral wall 223 connected between the two side walls 221 and 222. The two side walls 221 and 222 are configured to connect the peripheral wall 223 to the rotation shaft 21, so as to drive the peripheral wall 23 to rotate when the rotation shaft 21 rotates, to open or close the air flap 20 and thus control the flow direction of the airflow. Of course, the present disclosure is not limited to the above-described structure of the air flap 20; for example, the air flap 20 could also be disc-shaped or have another suitable shape, as long as it can be opened or closed to control the flow direction of the airflow.

Continuing to refer to Figs. 10 and 11, the rotation shaft 21 at a first end of the air flap 20 (specifically, an end close to the side wall 221, i.e. an end close to the outside of the housing 10) is a hollow rotation shaft, to allow the communicating channel 11 to be plugged therein, and the airflow in the air duct 100 can flow to the communicating channel 11 through a hollow part of the hollow rotation shaft, and then flow to the outside of the housing 10. A rotation shaft at a second end of the air flap 20 (specifically, an end close to the side wall 222) may be a hollow rotation shaft, to allow the other air flap 20 to be plugged therein. In this embodiment, the rotation shaft at the second end of the air flap 20 (i.e. the end close to the side wall 222) may be a connecting shaft with a smaller radial dimension than the hollow rotation shaft mentioned above, and is mainly configured to have a rotation shaft of the other air flap 20 inserted/plugged therein, and to support the other air flap 20, as shown in Fig. 6.

In an embodiment, a gear 23 fixedly connected to the rotation shaft 21 is further provided at the first end of the air flap 20, the gear 23 being arranged coaxially with the rotation shaft 21. A central hole part of the rotation shaft 21 may run through the gear 23, so that the airflow in the air duct 100 can flow into the communicating channel 11. Of course, it could also be said that the rotation shaft 21 of the air flap 20 comprises, at the end close to the outside of the housing 10, the gear 23 arranged coaxially therewith, and the central hole part of the rotation shaft 21 runs through the gear 23. A driving mechanism (not shown) drives the air flap 20 to rotate by driving the gear 23.

The rotation shaft 21 of the air flap 20, in particular the gear 23 thereof, is configured to surround the internal portion 10 of the communicating channel 11 of the housing 10; in other words, the internal portion 10 of the communicating channel 11 may be inserted into the hollow rotation shaft, in particular into the gear 23 (as shown in Fig. 5), to achieve the butt-connection of the communicating channel 11 to the hollow rotation shaft of the air flap 20, so that the airflow in the air duct 100 flows through the hollow rotation shaft and the communicating channel 11 to the outside of the housing 10.

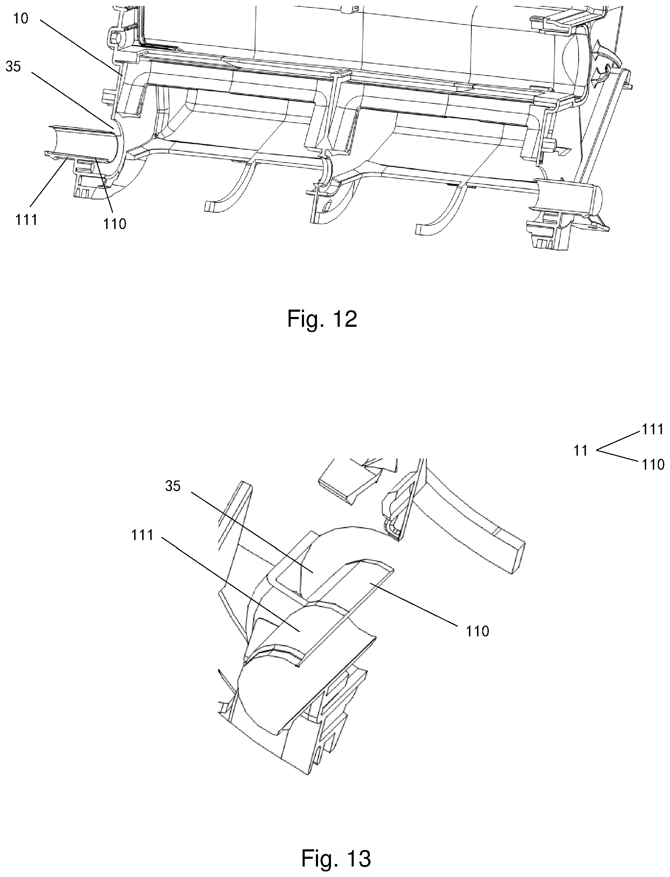

To allow the driving mechanism (not shown) outside the housing 10 to be drive-connected to the gear 23, as shown in Figs. 11 and 12, a connection port 35 may be provided at the position of connection of the communicating channel 11 to the housing 10, and the connection port 35 may be an opening in the shape of an annular sector. When the communicating channel 11 is inserted into the gear 23, the gear 23 can be exposed to the outside of the housing 10 through the connection port 35 (as shown in Fig. 5), so that the driving mechanism outside the housing 10 can be easily drive-connected to the gear 23, so as to drive the air flap 20 to rotate.

Returning to refer to Fig. 6, the communicating channel 11 may be selectively in fluid communication with the hollow rotation shaft of either one of the two air flaps 20. The present disclosure mainly uses the case where the communicating channel 11 is in communication with the hollow rotation shaft of the air flap 20 shown at the left side of Fig. 6 as an example for illustration, but is not limited to this. A designer could adopt a specific configuration according to the positional relationship between the air conditioning apparatus 1 and the object requiring cooling (e.g. the box 3), and the actual circumstances. For example, a communicating channel with a blocked free end may be provided in advance at a position on the housing 10 corresponding to the hollow rotation shaft of each of the two air flaps 20 shown in Fig. 6; when the air conditioning apparatus 1 is required to deliver a cooling airflow to the outside via either one of these communicating channels, an operator can open up the communicating channel as necessary, to increase freedom of operation, and avoid various problems such as processing difficulty and impossibility of flexible configuration caused by additionally providing cooling holes on the housing 10.

As can be seen, in the air conditioning apparatus 1 according to the present disclosure, the housing 10 is provided with the communicating channel 11 which establishes communication between the interior thereof and the outside, and the communicating channel 11 can be in communication with the hollow rotation shaft of the air flap 20; this configuration allows the cooling airflow in the air duct 100 to flow through the hollow rotation shaft and the communicating channel 11 to the outside of the air conditioning apparatus 1, and cool an object (e.g. the box 3) outside it. In this way, a low temperature can be maintained in the box 3 even during high summer temperatures. Furthermore, the above configuration of the present disclosure also allows the cooling airflow which has just flowed to the air flap 20 (i.e. the cooling airflow which has not yet undergone other heat exchange) to be guided to the box 3 directly, increasing the efficiency with which the box 3 is cooled, and avoiding problems such as a low degree of integration and inadequate cooling efficiency caused by additionally providing cooling holes at other positions on the housing. In addition, the communicating channel 11 of the present disclosure can selectively be in fluid communication with the hollow rotation shaft of either one of the two air flaps 20. For example, a communicating channel 11 with a blocked free end may be provided in advance at a position on the housing 10 corresponding to the hollow rotation shaft of each of the two air flaps 20 respectively, and one communicating channel 11 can be opened up as necessary according to actual needs, to increase freedom of operation, and avoid various problems such as processing difficulty and impossibility of flexible configuration caused by additionally providing cooling holes on the housing.

The present disclosure further provides a cooling system 4. Specific embodiments of the cooling system 4 are described in detail below with reference to Fig. 1.

Referring to Fig. 1, the cooling system 4 comprises the air conditioning apparatus 1 with the structure described above, the box 3, and the connecting tube 2 establishing communication between the air conditioning apparatus 1 and the box 3. This configuration allows a cooling airflow in the air conditioning apparatus 1 to be guided into the box 3 to cool same.

Specifically, the communicating channel 11 is provided on the housing 10 of the air conditioning apparatus 1 at a side close to the box 3, wherein the communicating channel 11 establishes communication between the interior of the air conditioning apparatus 1, in particular the interior of the housing 10 thereof or the interior of the air duct 100 thereof and the outside, and the communicating channel 11 may be connected to and in fluid communication with the hollow rotation shaft of the air flap 20 in the air duct 100, so that the cooling airflow in the air duct 100 can flow through the hollow rotation shaft and the communicating channel 11 to the outside of the air conditioning apparatus 1.

The box 3 may be an in-vehicle glove box, but the present disclosure is not limited to this; for example, the box 3 may be any other component which requires its interior to be cooled. The box 3 is provided with a through-hole, for receiving a cooling airflow from the air conditioning apparatus 1.

One end of the connecting tube 2 is connected to and in communication with the communicating channel 11 of the air conditioning apparatus 1, and in particular is connected in a sealed manner to the flange 13 at the free end of the communicating channel 1, to avoid leakage of cooling airflow; the other end of the cooling tube 2 is connected to and in communication with the through-hole of the box 3, so as to guide the cooling airflow into the box 3 from within the air conditioning apparatus 1, so as to cool the box 3. Thus, even during high summer temperatures, food, drinks and articles that easily melt and deform can be stored in the box 3, so that they remain at a low temperature, extending the storage time.

In an embodiment, the connecting tube 2 may be a hard connecting tube, to avoid obstructed gas circulation or the risk of rupture due to excessive deformation. A rubber structure may be provided at each of the two ends of the connecting tube 2, to facilitate sealed connection to the communicating channel 1 and the box 3, to avoid fluid leakage.

The present disclosure also provides a motor vehicle, which may comprise the cooling system 4 described above.

The above embodiments of the present disclosure mainly use the case where the communicating channel 11 is a straight tubular channel as an example for illustration, but the present disclosure is not limited to this; for example, the communicating channel 11 could also be a bent tubular channel, as long as it can be in communication with the hollow rotation shaft of the air flap 20 and guide airflow to the outside of the housing 10 from within the air duct 100.

In addition, the above embodiments of the present disclosure mainly use the case where the gear 23 of the air flap 20 is exposed to the outside of the housing 10 as an example for illustration, but the present disclosure is not limited to this. For example, it is also possible that the gear of the air flap 20 is not exposed to the outside of the housing 10; in this case, a driving mechanism may be arranged inside the housing 10 to drive the rotation of the air flap 20, as long as the driving mechanism does not interfere with other components in the housing 10.

Demonstrative ways of implementing the air conditioning apparatus, the cooling system and the motor vehicle provided in the present disclosure have been described above with reference to preferred embodiments, but those skilled in the art will understand that as long as the concept of the present disclosure is not deviated from, various changes and modifications could be made to the specific embodiments above, and various technical features and structures set forth in the present disclosure could be combined in various ways, without exceeding the scope of protection of the present disclosure, which is specified by the attached claims.

## Claims

1. Air conditioning apparatus (1), **characterized in that** the air conditioning apparatus (1) comprises:
a housing (10), having an air duct (100);
an air flap (20), arranged in the air duct (100) and having a rotation shaft (21);
wherein the housing (10) has a communicating channel (11) establishing communication between the interior thereof and the outside, and the rotation shaft (21) of the air flap (20) is a hollow rotation shaft and is connected to the communicating channel (11), so that the air duct (100) is in fluid communication with the outside of the housing (10).

2. Air conditioning apparatus (1) according to Claim 1, **characterized in that** the air conditioning apparatus (1) further comprises an evaporator located upstream of the air flap (20).

3. Air conditioning apparatus (1) according to Claim 1, **characterized in that** the communicating channel (11) and the hollow rotation shaft extend along the same axis.

4. Air conditioning apparatus (1) according to any one of Claims 1 - 3, **characterized in that** the communicating channel (11) is a tubular channel, which is at least partially inserted into the hollow rotation shaft (21).

5. Air conditioning apparatus (1) according to Claim 4, **characterized in that** the communicating channel (11) has an internal portion (110) and an external portion (111), which respectively extend inside the housing (10) and outside the housing (10).

6. Air conditioning apparatus (1) according to Claim 5, **characterized in that** a flange (13) directed radially outwards is provided at a free end of the external portion (111) of the communicating channel (11).

7. Air conditioning apparatus (1) according to Claim 1, **characterized in that** the housing (10) has at least two air flaps (20) supported on an outer wall of the housing (10), and the communicating channel (11) is selectively fluidically connectable to the hollow rotation shaft of at least one air flap (20).

8. Cooling system (4), **characterized in that** the vehicle cooling system (4) comprises:
the air conditioning apparatus (1) according to any one of Claims 1 - 7;
a box (3) having a through-hole; and
a connecting tube (2), having one end connected to the communicating channel (11) of the air conditioning apparatus (1), and another end connected to the through-hole of the box (3).

9. Cooling system (4) according to Claim 8, **characterized in that** the connecting tube (2) is connected in a sealed manner to a flange (13) at a free end of the communicating channel (11) of the air conditioning apparatus (1).

10. Cooling system (4) according to Claim 8, **characterized in that** the box (3) is an in-vehicle glove box.

11. Motor vehicle, **characterized in that** the motor vehicle comprises the cooling system according to Claim 8 or 9.
